# EUROPEAN PATENT APPLICATION

(11) **EP 4 471 980 A1**
(43) Date of publication of application: **04.12.2024**
(21) Application number: 24716613.5
(22) Date of filing: 21.03.2024
(51) Int. Cl.: H01Q 1/22, H01Q 7/00, H01Q 1/52, H01Q 5/28

(54) **ELECTRONIC DEVICE AND ANTENNA STRUCTURE OF ELECTRONIC DEVICE**

(30) Priority: 19.04.2023 KR 20230051323; 02.05.2023 KR 20230056974
(71) Applicant: Samsung Electronics Co., Ltd., Suwon-si, Gyeonggi-do 16677 (KR); Hansol Technics Inc., Seoul 04551 (KR)
(72) Inventor: KIM, Younju, Suwon-si Gyeonggi-do 16677 (KR); KIM, Jinkyung, Seoul 04551 (KR); PARK, Sungchul, Suwon-si Gyeonggi-do 16677 (KR); SHIN, Seungshik, Suwon-si Gyeonggi-do 16677 (KR)
(74) Representative: Nederlandsch Octrooibureau
(86) International application number: PCT/KR2024/095599
(87) International publication number: WO 2024/219926

(57) **Abstract**

An electronic device according to various embodiments of the disclosure may include a housing, a display, a coil antenna disposed within the housing and in a first direction of the display, a dummy pattern disposed adjacent to the coil antenna and in a second direction different from the first direction from the coil antenna, and a processor configured to transmit a signal to an external electronic device through the coil antenna. The dummy pattern may configure a closed loop. When current flows through the coil antenna according to a signal transmitted from the processor, current may flow through the dummy pattern due to mutual induction. In addition, various embodiments may be possible.

## Description

### [Technical Field]

The disclosure relates to an electronic device and, for example, to an electronic device including a coil antenna.

### [Background Art]

As the functions of portable electronic devices (hereinafter referred to as electronic devices), such as smartphones or tablet PCs, become more diverse, electronic devices are being equipped with various types of wireless communication functions. NFC (near field communication), one of the wireless communications provided by electronic devices, may provide wireless communication over a short distance to two adjacent devices and may be used in various fields such as mobile payments, authentication, or data transmission and reception.

The electronic device may have an NFC antenna placed inside a housing to support NFC. When using an NFC function, a user may place one surface of the electronic device on an NFC reader, and wireless communication based on NFC may be performed when the NFC antenna of the electronic device and an NFC antenna of the NFC reader are adjacent to each other.

### [Disclosure of Invention]

### [Technical Problem]

Since NFC enables wireless communication over a short distance (e.g., within 4 cm), an NFC antenna pattern of an electronic device and an NFC antenna pattern of an NFC reader need to be close to each other during NFC recognition. When the size of the NFC antenna pattern of the electronic device and the size of the NFC antenna pattern of the NFC reader are different from each other, a shadow space may be formed around the NFC antenna pattern of the electronic device. Since a user may not know the location of the NFC antenna, the distance between the NFC antenna pattern of the electronic device and the NFC antenna pattern of the NFC reader increases due to the shadow space formed when the electronic device is mounted on the NFC reader. As a result, accurate recognition may not be achieved.

### [Solution to Problem]

The electronic device according to the disclosure (or specification or invention) may include a housing, a display, a coil antenna disposed within the housing and in a first direction of the display, a dummy pattern disposed adjacent to the coil antenna and in a second direction different from the first direction form the coil antenna, and a processor configured to transmit a signal to an external electronic device through the coil antenna.

According to an embodiment, the dummy pattern may configure a closed loop.

According to an embodiment, when current flows through the coil antenna according to a signal transmitted from the processor, current may flow through the dummy pattern due to mutual induction.

### [Advantageous Effects of Invention]

According to various embodiments of the disclosure, the recognition region of an NFC antenna may be expanded by adding a dummy pattern adjacent to the NFC antenna of an electronic device, thereby enabling more accurate NFC recognition.

### [Brief Description of Drawings]

FIG. 1 is a block diagram of an electronic device in a network environment, according to various embodiments.
FIG. 2 illustrates positions of an NFC antenna of an electronic device and an NFC antenna of an NFC reader according to an embodiment.
FIG. 3 illustrates the relative positions between an NFC antenna of an electronic device and an NFC antenna of an NFC reader when the electronic device is mounted at various positions on the NFC reader, according to an embodiment.
FIG. 4 illustrates an NFC antenna and a dummy pattern of an electronic device according to an embodiment.
FIGS. 5A to 5C illustrate a stacked structure including an NFC antenna and a dummy pattern of an electronic device according to an embodiment.
FIG. 6 illustrates a manner of transmitting a signal to an NFC reader by an NFC antenna and a dummy pattern of an electronic device according to an embodiment.
FIG. 7 illustrates an NFC antenna and a dummy pattern of an electronic device according to an embodiment.
FIG. 8 illustrates the relative positions between an NFC antenna and a dummy pattern of an electronic device and an NFC antenna of an NFC reader when the electronic device is mounted at various positions on the NFC reader, according to an embodiment.
FIG. 9 illustrates a dummy pattern arranged on an external cover according to an embodiment.
FIG. 10 illustrates an arrangement structure of an RF antenna and a dummy pattern according to an embodiment.

### [Mode for the Invention]

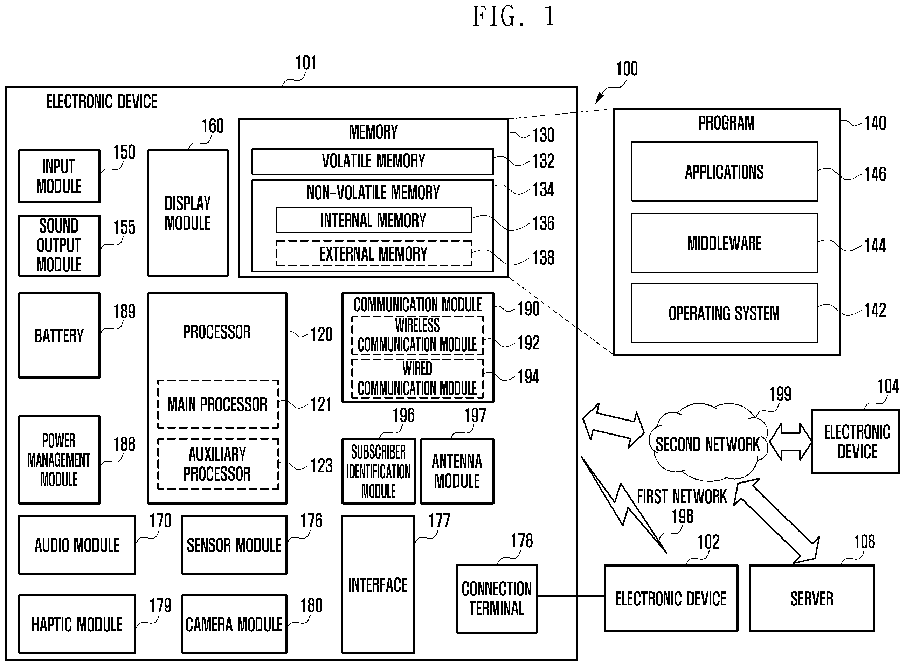

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

Hereinafter, the horizontal right direction of the electronic device may be referred to as the x direction, the vertically upper direction of the electronic device, perpendicular to the x direction may be referred to as the y direction, and the direction from the back cover of the electronic device toward the display, perpendicular to the x and y directions may be referred to as the z direction. Although being referred to as the x-direction, y-direction, and z-direction, those directions may also include directions tilted by a predetermined angle.

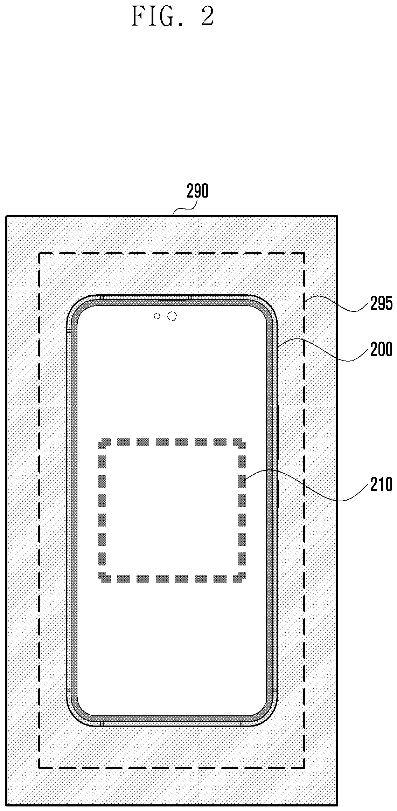

FIG. 2 illustrates positions of an NFC antenna of an electronic device and an NFC antenna of an NFC reader according to an embodiment.

FIG. 2 illustrates the electronic device 200 mounted in the center of the NFC reader 290.

According to an embodiment, the electronic device 200 (e.g., the electronic device 101 of FIG. 1) and the NFC reader 290 may support near field communication (NFC). For example, the electronic device 200 may include a coil-type NFC antenna 210 for transmitting and receiving NFC signals, and the NFC antenna 210 configures a loop (e.g., a closed loop). In the disclosure, the NFC antenna 210 may also be referred to as a coil antenna. NFC may provide wireless communication over a short distance when the electronic device 200 and an external electronic device supporting NFC (e.g., the NFC reader 290) are placed adjacent to each other, and may be used in various field such as mobile payment, authentication, or data transmission and reception. For example, when the electronic device 200 activates a payment application, the electronic device 200 may transmit authentication information of the electronic device 200 through the NFC antenna 210, and the NFC reader 290 may identify the authentication information of the electronic device 200 and transmit authentication information to a payment system, whereby a payment may be performed. In addition, NFC may be used for vehicle driver authentication. When the electronic device 200 is mounted on the NFC reader 290 that is integrated with a vehicle's wireless charging pad, the electronic device 200 may transmit authentication information through the NFC antenna 210, and the vehicle operation such as starting the vehicle may be allowed when authentication is completed by the vehicle's NFC reader 290.

According to an embodiment, the NFC reader 290 may include an NFC antenna 295, and the NFC antenna 295 may be accommodated inside the NFC reader 290, or at least a portion of the antenna pattern may be exposed to the outside. For example, the NFC reader 290 may have at least a flat portion of the top of the NFC reader 290 such that the electronic device 200 may be mounted thereon.

According to an embodiment, the electronic device 200 may include the NFC antenna 210. For example, the NFC antenna 210 may be a loop-type antenna including a metal material (e.g., Cu). The loop-type antenna may generate an electromagnetic field to receive surrounding electromagnetic waves, and may include a coupling circuit that connects a loop pattern that generates the electromagnetic field and the antenna. The electronic device 200 may include an NFC processor (not shown) that generates and processes an NFC signal, or the generation and processing of the NFC signal may also be performed by an application processor (e.g., the processor 120 of FIG. 1).

According to an embodiment, the NFC antenna 210 may be included on a flexible printed circuit board (FPCB). Accordingly, the size of the FPCB may need to be increased to expand the size of the loop pattern of the NFC antenna 210, and there are restrictions on increasing the size of the NFC antenna 210 due to issues with placement space and manufacturing cost.

Referring to FIG. 2, the NFC antenna 210 of the electronic device 200 may be placed in the center region of the electronic device 200. For example, the NFC antenna 210 may be placed inside a housing of the electronic device 200 and below a display and a battery (e.g., the -z-axis direction). Because the recognition distance of the NFC antenna 210 is short and there are restrictions on enlarging the size of the NFC antenna 210, a shadow space where NFC recognition is not achieved may be formed in the upper/lower/left/right regions of the NFC antenna 210.

As shown in FIG. 2, the size of the NFC antenna 210 of the electronic device 200 and the size of the NFC antenna 295 of the NFC reader 290 may be different from each other. In this case, the NFC antenna 210 of the electronic device 200 and the NFC antenna 295 of the NFC reader 290 are distant from each other even when the electronic device 200 is placed in the center of the NFC reader 290, and therefore, the NFC recognition rate may decrease. In addition, a portion of the housing of the electronic device 200 may be formed of metal, and when the metal portion is adjacent to the NFC antenna 295 of the NFC reader 290, the metal portion may become a factor that interferes with the coupling between the NFC antenna 210 of the electronic device 200 and the NFC antenna 295 of the NFC reader 290 and thus may cause the recognition rate to be further decreased.

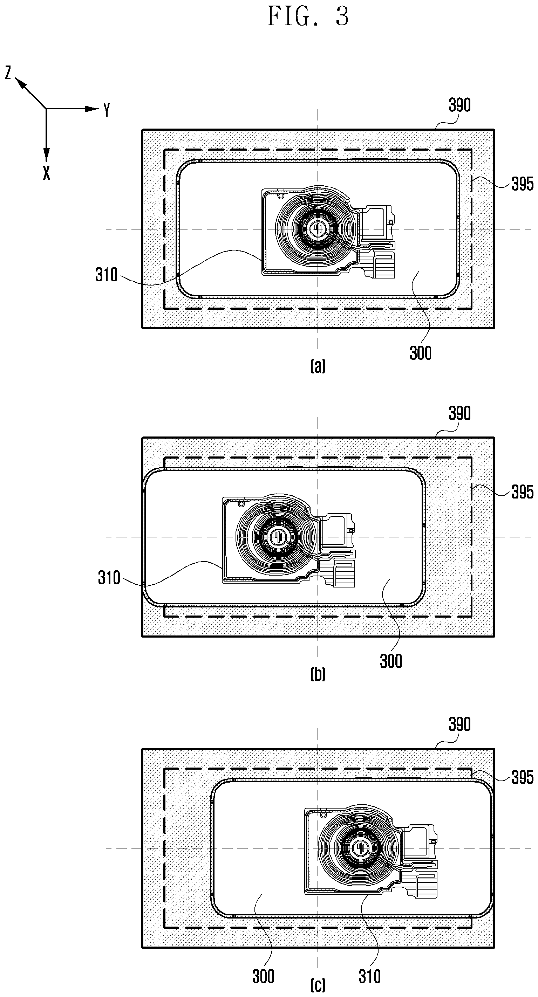

FIG. 3 illustrates the relative positions between an NFC antenna of an electronic device and an NFC antenna of an NFC reader when the electronic device is mounted at various positions on the NFC reader, according to an embodiment.

The structure of FIG. 3 including an NFC antenna 310 (or coil antenna) of an electronic device 300 and an NFC antenna 395 (or coil antenna) of an NFC reader 390 is substantially identical to the structure of FIG. 2 including the NFC antenna 210 of the electronic device 200 and the NFC antenna 295 of the NFC reader 290.
(a) of FIG. 3 illustrates the electronic device 300 mounted in the center of the NFC reader 390. Referring to (a) of FIG. 3, since the size of the NFC antenna 310 disposed in the center of the electronic device 300 and the size of the NFC antenna 395 of the NFC reader 390 are different from each other, NFC recognition may not be achieved when the electronic device 300 is placed in the center of the NFC reader 390. For example, the NFC reader 390 may be an NFC car key reader that doubles as a wireless charger and is placed in a vehicle. In this case, as shown in (a) of FIG. 3, the electronic device 300 may have to be mounted in the center of the NFC reader 390, which is a designated location.

As described above, when the electronic device 300 is mounted in the center of the NFC reader 390, NFC Recognition may be difficult since the proximity distance between the NFC antenna 310 of the electronic device 300 and the NFC antenna 395 of the NFC reader 390 is large, and when the NFC reader 390 includes even a wireless charging antenna, the NFC recognition rate may further be lowered due to the influence of the wireless charging antenna.

According to an embodiment, when the electronic device 300 is not recognized by NFC while the electronic device 300 is placed on the NFC reader 390, the electronic device 300 may be guided to move its position through the GUI displayed on a display, sound output through a speaker, and/or vibration effects. Guiding the electronic device 300 to move its position, as described above, may not be good in terms of user experience.

(b) of FIG. 3 illustrates the electronic device 300 mounted after having been moved in the -y direction from the center of the NFC reader 390. Even in the case of (b) of FIG. 3, since the region where the electronic device 300 overlap the loop of the NFC antenna 395 of the NFC reader 390 is a shadow region where the NFC antenna 310 of the electronic device 300 is not disposed, accurate NFC recognition may not be achieved.

(c) of FIG. 3 illustrates the electronic device 300 mounted after having been moved in the y direction from the center of the NFC reader 390. Even in the case of (c) of FIG. 3, since the region where the electronic device 300 overlap the loop of the NFC antenna 395 of the NFC reader 390 is a shadow region where the NFC antenna 310 of the electronic device 300 is not disposed, accurate NFC recognition may not be achieved.

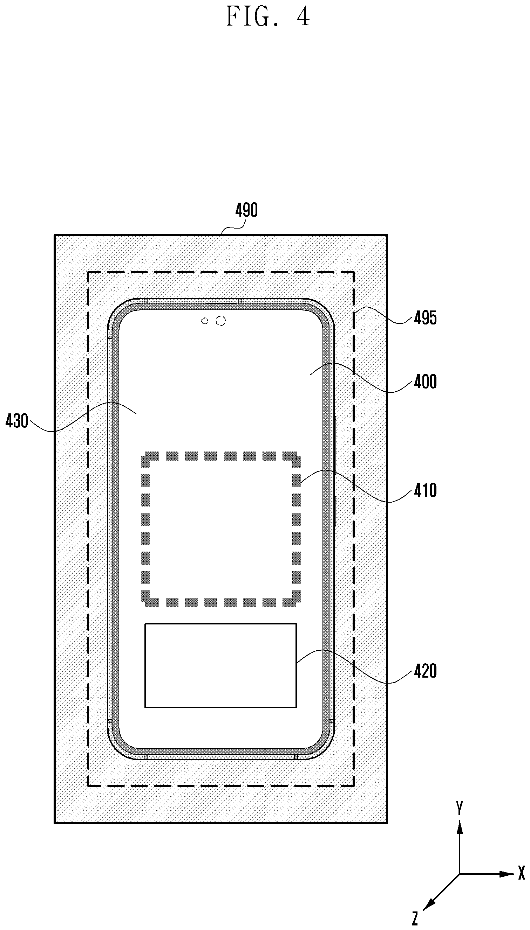

Hereinafter, a structure enabling expansion of the NFC recognition region by using a separate dummy pattern without increasing the size of the NFC antenna of the electronic device will be described with reference to FIGS. 4 to 10.

FIG. 4 illustrates an NFC antenna and a dummy pattern of an electronic device according to an embodiment.

According to an embodiment, the electronic device 400 may include a display 430, an NFC antenna 410, and a dummy pattern 420, by replacing the shadow region where the NFC antenna 410 of the electronic device 400 is not disposed. The electronic device 400 may include at least one of the components and/or functions of the electronic device 101 of FIG. 1, such as the processor 120, the memory 130, or the communication module 190.

According to an embodiment, each component of the electronic device 400 may be accommodated in a housing, and at least a component (e.g., the display 430) may be exposed to the outside of the housing. According to an embodiment, the housing may include a non-conductive material (e.g., plastic, ceramic, or glass), and at least a portion thereof (e.g., an outer structure of the edge) may include a metal material.

According to an embodiment, the display 430 may display various images. For example, the display may be implemented as either a liquid crystal display (LCD), a light-emitting diode (LED) display, an organic light-emitting diode (OLED) display, a micro electro mechanical systems (MEMS) display, or an electronic paper display, but is not limited thereto. The display 430 may include a touch screen that detects touch and/or proximity touch (or hovering) input using a user's body part (e.g., a finger) or an input device (e.g., a stylus pen). The display 430 may be exposed to the outside in the z-direction of the housing. The display 430 may include at least one of the components and/or functions of the display module 160 of FIG. 1.

According to an embodiment, the electronic device 400 may include a near field communication (NFC) antenna 410. For example, the NFC antenna 410 may be a loop-type antenna including a coil made of a metal material (e.g., Cu). Referring to FIG. 4, in an embodiment, the NFC antenna 410 may be accommodated within a housing of the electronic device 400 and disposed in a central region in the housing. According to an embodiment, the NFC antenna 410 may be disposed on a flexible printed circuit board (FPCB) that is electrically connected to a main printed circuit board (PCB). The NFC antenna 410 may also be referred to as a coil antenna.

According to an embodiment, the electronic device 400 may include an NFC processor (not shown) configured to generate an NFC signal. The NFC processor may be implemented as a separate chip and placed on the main PCB, or the operation of the NFC processor may be performed by an application processor (e.g., the processor of FIG. 1). In an embodiment, a matching circuit for performing impedance matching may be provided between the NFC processor and the NFC antenna 410.

According to an embodiment, the NFC antenna 410 may be located toward the -z direction from the display 430, for example, toward the back cover. For example, a battery may be disposed between the NFC antenna 410 and the display 430. The battery may be, for example, a built-in battery or a separable battery that is detachable from the electronic device 400.

According to an embodiment, a shielding sheet may be provided in the z direction of the NFC antenna 410 (or the FPCB having the NFC antenna 410 disposed thereon). The shielding sheet may block at least a portion of radio waves emitted in the z direction to prevent radio waves output from the NFC antenna 410 from affecting the display 430 and/or the battery. According to an embodiment, the shielding sheet may include a graphite sheet and/or a protective sheet (shielding sheet). The graphite sheet may include, for example, a graphite material and may function to reduce heat and electromagnetic noise output from the NFC antenna 410. For example, the protective sheet may be formed of a metal material (e.g., Cu or Al) to block electromagnetic waves. The protective sheet may prevent electromagnetic interference between the NFC antenna 410 and the display 430 and/or the battery and enable stable signal transmission.

According to an embodiment, a metal sheet may be further disposed in the z-direction of the shielding sheet. The metal sheet may be formed of a metal material (e.g., Cu) and may function to block electromagnetic noise.

According to an embodiment, a polyethylene terephthalate (PET) film may be attached to the NFC antenna 410 (or the FPCB having the NFC antenna 410 disposed thereon) in the -z direction thereof. For example, the PET film may protect the NFC antenna 410 from external shock and prevent heat diffusion caused by the NFC antenna 410.

According to an embodiment, when an application using an NFC function is executed such that the NFC function is activated, the NFC processor (or application processor) may generate an NFC signal to provide the signal to the NFC antenna 410, and the NFC antenna 410 may emit radio waves, based on the NFC signal. For example, when the electronic device 400 is mounted on the NFC reader 490 such that the NFC antenna 410 of the electronic device 400 and the NFC antenna 495 of the NFC reader 490 are disposed adjacent to each other, mutual induction may occur between the NFC antenna 410 of the electronic device 400 and the NFC antenna 495 of the NFC reader 490. The NFC antenna 495 of the NFC reader 490 may receive an NFC signal transmitted from the electronic device 400 by a signal generated by the mutual induction.

Due to the short NFC recognition distance, when the NFC antenna 410 of the electronic device 400 and the NFC antenna 495 of the NFC reader 490 are not adjacent to each other, accurate NFC recognition may not be achieved, as described in FIGS. 2 and 3. According to an embodiment, the electronic device 400 may include a dummy pattern 420 so as to expand the recognizable region of the NFC antenna 410.

According to an embodiment, the dummy pattern 420 may include a metal material (e.g., Cu) and may not be directly connected to the NFC processor. For example, the dummy pattern 420 may not be electrically connected to the FPCB having the NFC antenna 410 disposed thereon and may be physically spaced apart from the FPCB. Accordingly, when current flows through the dummy pattern 420, a loop (e.g., a closed loop) independent of the loop of the NFC antenna 410 may be configured.

According to one embodiment, the dummy pattern 420 may be disposed adjacent to the NFC antenna 410. In particular the shadow region where the NFC antenna 410 of the electronic device 400 is not disposed, may be replaced by the dummy pattern 420, for improving accuracy of the NFC recognition. For example, the distance between the dummy pattern 420 and the NFC antenna 410 is not defined, but may be short enough to form mutual induction when the NFC antenna 410 emits radio waves. Referring to FIG. 4, the dummy pattern 420 may be disposed in a position uncovered by the NFC antenna 410, for example, in the -y direction of the NFC antenna 410, when viewed from the -z direction of the display 430. However, the dummy pattern 420 is not limited thereto, and may be disposed in various positions at least partially uncovered by the NFC antenna 410 in the XY plane.

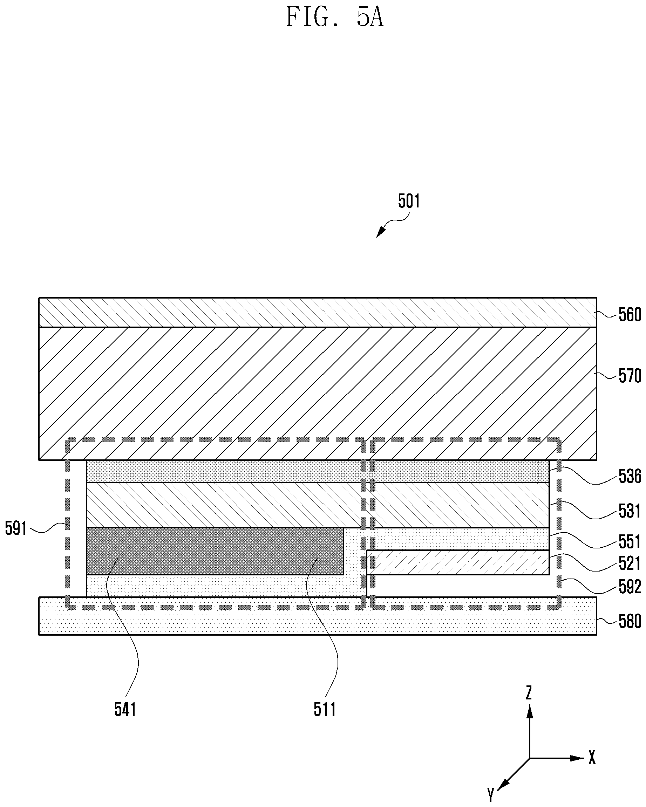

According to an embodiment, the shielding sheet (not shown) may include a first region that overlaps the NFC antenna 410 and a second region that does not overlap the NFC antenna 410. For example, at least a portion of the dummy pattern 420 may be disposed in the second region of the shielding sheet. The embodiment will be described in more detail with reference to FIG. 5A.

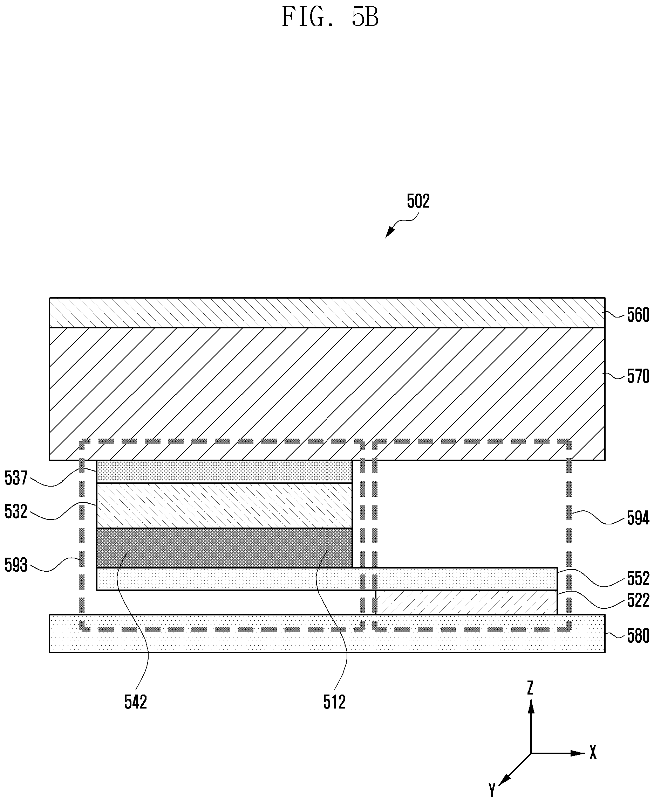

According to an embodiment, the shielding sheet may be formed to have an area narrower than the display 430 and/or the battery, and the dummy pattern 420 may be disposed not to overlap the shielding sheet in the -z direction of the display 430 and/or the battery. The embodiment will be described in more detail with reference to FIG. 5B.

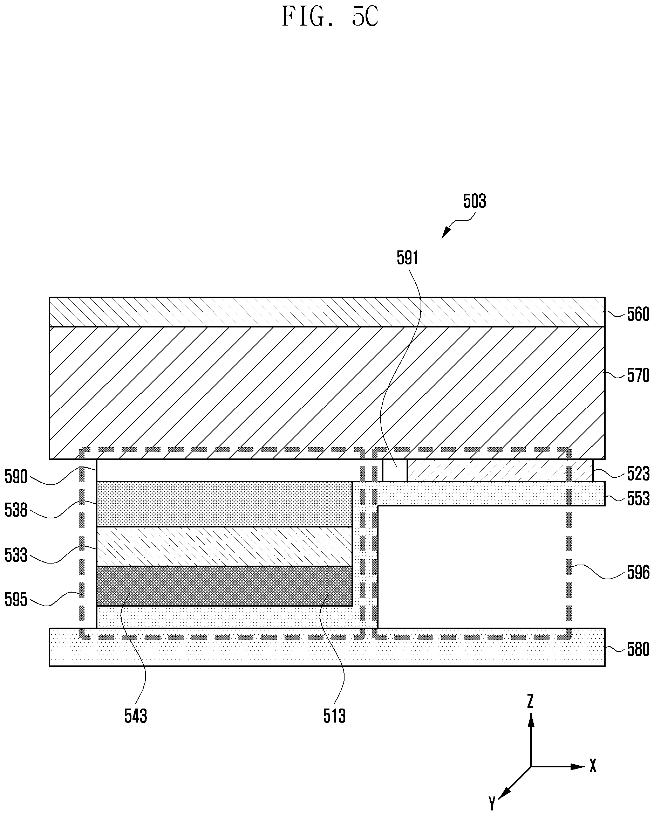

According to an embodiment, the dummy pattern 420 may be formed as a portion of a metal sheet disposed in the z-direction of the shielding sheet. For example, a portion of the metal sheet may be slit, and a region which is not disposed in the z-direction of the NFC antenna 410, among the silt and separated regions, may function as the dummy pattern 420. The embodiment will be described in more detail with reference to FIG. 5C.

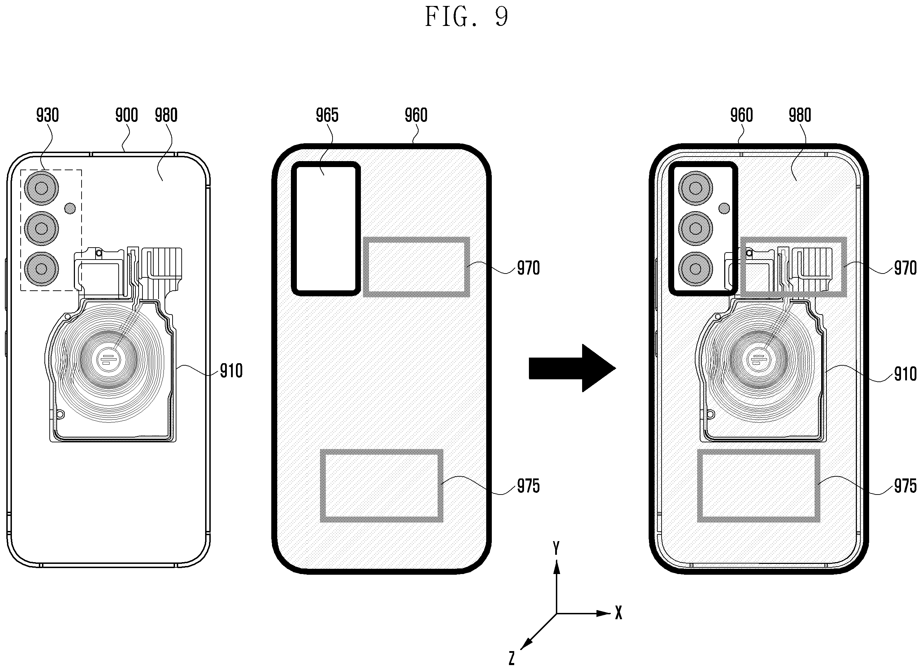

According to an embodiment, the dummy pattern 420 may be disposed on an accessory cover that is detachable from the housing of the electronic device 400. For example, the accessory cover may be in the form of covering the back cover of the housing, and the dummy pattern 420 may be formed at a location where mutual induction with the NFC antenna 410 is achievable when the accessory cover is attached to the electronic device 400. The embodiment will be described in more detail with reference to FIG. 9.

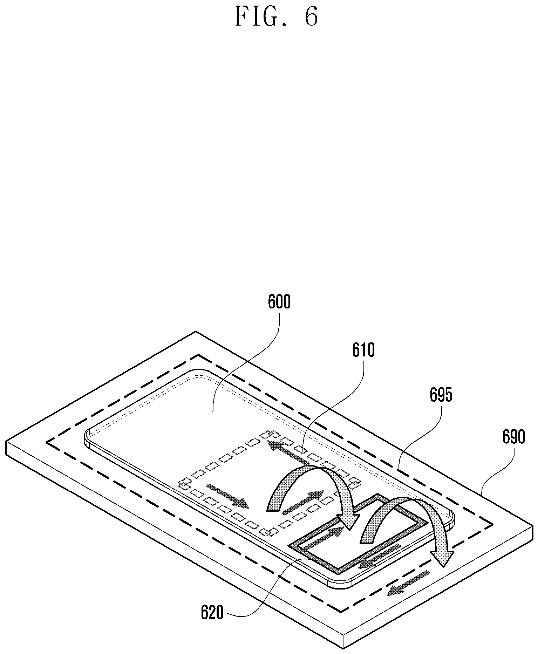

According to an embodiment, mutual induction may occur between the pattern of the NFC antenna 410 and the dummy pattern 420. For example, when current flows through the loop of the NFC antenna 410 according to the NFC signal output, a magnetic field may be generated therearound, and the current (or induction signal) may flow through the loop of the dummy pattern 420. The current flowing through the loop of the dummy pattern 420 may again generate a magnetic field, and current due to mutual induction may flow through the NFC antenna 495 of the NFC reader 490 adjacent to the dummy pattern 420. Accordingly, the NFC signal output from the NFC antenna 410 of the electronic device 400 may be transmitted to the NFC antenna 495 of the NFC reader 490 via the dummy pattern 420. Since the NFC antenna 495 of the NFC reader 490 may recognize a signal output from the NFC antenna 410 and/or the dummy pattern 420 of the electronic device, the recognition region of the NFC antenna 410 may be substantially expanded. In addition, the NFC polling signal output from the NFC reader 490 may be coupled through the dummy pattern 420 to enable detection of the RF field by the electronic device 400 to be easier. The method by which NFC signals are transmitted due to mutual induction will be described in more detail with reference to FIG. 6.

According to one embodiment, the electronic device 400 may include at least one capacitor and/or at least one inductor connected to the dummy pattern 420. The connection structure between the dummy pattern 420 and the capacitor and/or inductor is not defined and, for example, depending on the frequency characteristics of the NFC antenna 410, at least one capacitor and/or at least one inductor may be connected to the dummy pattern 420 to have an impedance that improves the mutual induction performance between the NFC antenna 410 and the dummy pattern 420.

According to an embodiment, the dummy pattern 420 may include a plurality of sub-dummy patterns. For example, the plurality of sub-dummy patterns may be physically spaced apart from each other and may configure respective independent loops. For example, the electronic device 400 may include three triangular-shaped sub-dummy patterns, but is not limited thereto.

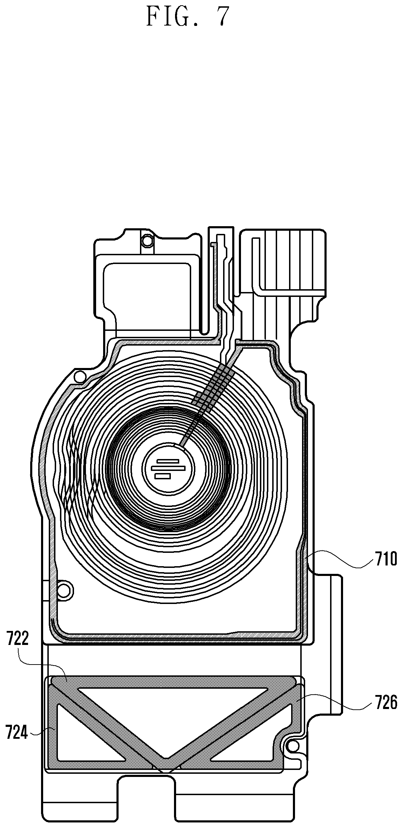

According to an embodiment, mutual induction may be formed between the NFC antenna 410 and at least one of the sub-dummy patterns and/or between the sub-dummy patterns. For example, when current flows through the NFC antenna 410, current due to mutual induction may flow through a first sub-dummy pattern disposed adjacent thereto, current may flow through a second sub-dummy pattern due to mutual induction between the first sub-dummy pattern and the second sub-dummy pattern, current may flow through a third sub-dummy pattern due to mutual induction between the first sub-dummy pattern and the third sub-dummy pattern, and current may flow through the NFC antenna 495 of the NFC reader 490 according to mutual induction due to the magnetic field formed by the first sub-dummy pattern, the second sub-dummy pattern, and the third sub-dummy pattern. Accordingly, the NFC signal output from the NFC antenna 410 may be transmitted to the NFC antenna 495 of the NFC reader 490 through each sub-dummy pattern. An example in which the dummy pattern 420 includes a plurality of sub-dummy patterns will be described in more detail with reference to FIG. 7.

According to an embodiment, the electronic device 400 may include at least one RF antenna that outputs an RF signal in a higher frequency band than the NFC antenna 410. For example, the electronic device 400 may support at least one wireless communication method such as cellular wireless communication (e.g., 4G LTE, 5G NR), Wi-Fi, or Bluetooth, and may include at least one RF antenna for transmitting and/or receiving signals of each wireless communication method. The frequency band used in each wireless communication method is not defined, but some RF antennas may transmit signals in the mmWave band.

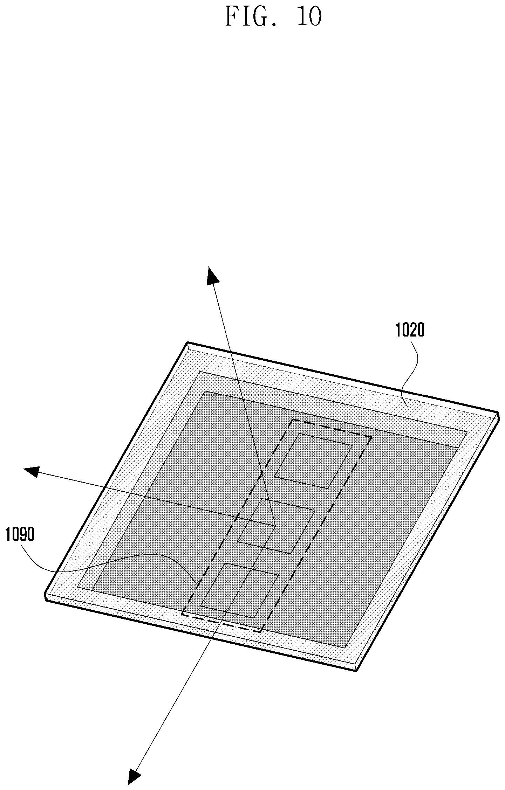

According to an embodiment, at least one of the at least one RF antenna may be disposed inside the loop configured by the dummy pattern 420. Accordingly, the leakage current of radio waves output by the RF antenna may be reduced by the dummy pattern 420. The embodiment will be described in more detail with reference to FIG. 10.

FIGS. 5A to 5C illustrate a stacked structure including an NFC antenna and a dummy pattern of an electronic device according to an embodiment.

Referring to FIGS. 5A to 5C, a display 560 (e.g., the display 430 of FIG. 4) may be disposed on the front surface (the z direction) of an electronic device (e.g., the electronic device 400 of FIG. 4), a battery 570 may be disposed in the -z direction of the display 560, and a back cover 580 of a housing may be disposed on the rear surface (the -z direction) of the electronic device. Various configurations including an NFC antenna 511 and a dummy pattern 521 may be disposed between the display 560 and/or the battery 570 and the back cover 580. In an embodiment, the dummy pattern 521 may be disposed in at least one position uncovered by the NFC antenna 511 between the display 560 and/or the battery 570 and the back cover 580. In particular the shadow region where the NFC antenna 511 is not disposed, may be replaced by the dummy pattern 521, for improving accuracy of the NFC recognition. FIGS. 5A to 5C illustrate the dummy patterns 521, 522, and 523 as being disposed in positions which do not completely overlap with the NFC antennas 511, 512, and 513 with respect to the z direction, but the patterns are not limited thereto. One region of the dummy pattern 521, 522, or 523 may be also arranged to overlap one region of the NFC antenna 511, 512, or 513 with respect to the z-direction.

According to an embodiment, the shielding sheet (e.g., the graphite sheet 536 or the protective sheet 53 1) may cover a first region 591 where the NFC antenna 511 is disposed in the -z direction, and a second region 592 where the NFC antenna 511 is not disposed. The dummy pattern 521 may be disposed in the -z direction from the second region 592 of the shielding sheet.

Referring to the structure 501 of FIG. 5A, in an embodiment, a polyethylene terephthalate (PET) film 551 may be disposed in the z direction of the back cover 580. The PET film 551 may protect the NFC antenna 511 from external shock and prevent heat diffusion caused by the NFC antenna 511. For example, the PET film 551 may be formed in the first region 591 and the second region 592. In an embodiment, a portion of the PET film 551 located in the first region 591 and a portion of the PET film 551 located in the second region 592 may have a step difference. For example, the portion of the PET film 551 corresponding to the first region 591 may be attached to the FPCB 541 having the NFC antenna 511 disposed thereon, and the portion of the PET film 551 corresponding to the second region 592 may be attached to the protective sheet 531.

According to an embodiment, the FPCB 541 having the NFC antenna 511 disposed thereon may be disposed in the z-direction of the PET film 551. For example, the FPCB 541 may be electrically connected to the main PCB, and the NFC antenna 511 may be electrically connected to an NFC processor disposed on the main PCB. For example, the FPCB 541 (or NFC antenna 511) may be formed to have an area narrower than the PET film 551, the protective sheet 531, and the graphite sheet 536. For example, the FPCB 541 (or the NFC antenna 511) may be disposed in the first region 591.

According to an embodiment, a shielding sheet (e.g., the protective sheet 531 and/or the graphite sheet 536) may be disposed in the z-direction of the NFC antenna 511. For example, the graphite sheet 536 may include a graphite material and may function to reduce heat and electromagnetic noise output from the NFC antenna 511. The protective sheet 531 may be made of a metal material (e.g., Cu, Al) and may block electromagnetic waves. The protective sheet 531 may prevent electromagnetic interference between the NFC antenna 511 and the display 560 and/or the battery 570 and enable stable signal transmission. Referring to FIG. 5A, in an embodiment, the graphite sheet 536 and the protective sheet 531 may be located on the first region 591 where the NFC antenna 511 is disposed and the second region 592 where the NFC antenna 511 is not disposed.

According to an embodiment, the dummy pattern 521 may be disposed in the second region 592 where the NFC antenna 511 is not disposed and in the -z direction of the protective sheet 531. Referring to FIG. SA, the dummy pattern 521 may be disposed in the x-direction of the NFC antenna 511, for example, in an empty space in the second region 592 of the protective sheet 531 where the FPCB 541 is not disposed. For example, the z-direction surface of the dummy pattern 521 may be attached to the PET film 551.

According to an embodiment, the shielding sheet (e.g., the graphite sheet 537 or the protective sheet 532) may be formed to have an area narrower than the display 560 and/or the battery 570, and the dummy pattern 522 may be disposed in a region where the shielding sheet is not disposed and in the -z direction of the display 560 and/or the battery 570.

Referring to the structure 502 of FIG. 5B, a PET film 552 may be disposed in the z-direction of the back cover 580. The PET film 552 may be disposed in a first region 593 and a second region 594.

According to an embodiment, a protective sheet 532 and a graphite sheet 537 may be disposed between the display 560 and/or the battery 570 and the FPCB 542. Referring to FIG. 5B, the protective sheet 532 and the graphite sheet 537 may cover only the first region 593 of regions between the display 560 and/or the battery 570 and the back cover 580.

According to an embodiment, the FPCB 542 with the NFC antenna 512 may be disposed in the z-direction of the PET film 552. The FPCB 542 may be electrically connected to the main PCB, and the NFC antenna 512 may be electrically connected to an NFC processor disposed on the main PCB. Referring to FIG. 5B, the FPCB 542 (or the NFC antenna 512) may have an area narrower than the PET film 552 and may be formed to have an area similar in size to the protective sheet 532 and the graphite sheet 537.

According to an embodiment, the dummy pattern 522 may be disposed in the -z direction from the display 560 and/or the battery 570 and in the second region 594 where a shielding sheet (e.g., the protective sheet 532 and the graphite sheet 537) is not disposed. Referring to FIG. 5B, the second region 594 in the x direction of the shielding sheet and the FPCB 542 may be an empty space, and the dummy pattern 522 may be disposed in the empty space. Referring to FIG. 5B, the dummy pattern 522 may be disposed in the -z direction of the PET film 552, but may also be disposed in the z direction opposite thereto.

Referring to the structure 503 of FIG. 5C, in an embodiment, a graphite sheet 538, a protective sheet 533, a FPCB 543 including an NFC antenna 513, and/or a PET film 553 may be disposed in the -z direction in a first region 595 between a display 560 and/or a battery 570 and a back cover 580. For example, the PET film 553 may be disposed in the first region 595 and a second region 596.

According to an embodiment, a dummy pattern 523 may be formed as a portion of a metal sheet 590 disposed in the z direction of the shielding sheet (e.g., the graphite sheet 538 or the protective sheet 533). For example, a slit 591 may be formed through a portion of the metal sheet 590, and a region which is not disposed in the z direction of the NFC antenna 513, among the regions separated by the slit, may include the dummy pattern 523. According to an embodiment, the loop-type dummy pattern 523 may be disposed in a region which is uncovered by the NFC antenna 513 and the shielding sheet, among the regions of the metal sheet 590 divided by the slit 591.

According to an embodiment, the electronic device may include the metal sheet 590 disposed in the z direction of the shielding sheet (e.g., the graphite sheet 538 or the protective sheet 533), for example, between the display 560 and/or the battery 570 and the shielding sheet. For example, the metal sheet 590 may be formed of a metal material (e.g., Cu) and may function to block electromagnetic noise.

According to an embodiment, the slit 591 may be formed through one region of the metal sheet 590. The portion of the metal sheet 590 located in the first region 595 and the portion of the metal sheet 590 located in the second region 596 may be physically separated from each other by the slit 591. According to an embodiment, one region of the metal sheet 590 divided by the slit 591 may be operated as the dummy pattern 523. Referring to FIG. 5C, the portion located in the second region 596 of the metal sheet 590 may function as the dummy pattern 523 to expand the NFC recognition region of the NFC antenna 513. For example, the dummy pattern 523 may be attached to the PET film 553.

According to the above-mentioned structures 501, 502, and 503 as shown in FIGS. 5A, 5B, and 5C, the dummy pattern may cover the second region uncoverable by the NFC antenna, thereby expanding the NFC recognition region.

FIG. 6 illustrates a manner of transmitting a signal to an NFC reader by an NFC antenna and a dummy pattern of an electronic device according to an embodiment.

According to an embodiment, an NFC antenna 610 (e.g., the NFC antenna 410 of FIG. 4, the NFC antenna 511 of FIG. 5A, the NFC antenna 512 of FIG. 5B, or the NFC antenna 513 of FIG. 5C) may electrically connected to an NFC processor to transmit and/or receive an NFC signal. When an NFC signal is supplied to the NFC antenna 610, current may flow through the NFC antenna 610, current due to mutual inductance may flow through the dummy pattern 620 (e.g., the dummy pattern 420 of FIG. 4, the dummy pattern 521 of FIG. 5A, the dummy pattern 522 of FIG. 5B, or the dummy pattern 523 of FIG. 5C) disposed adjacent to the NFC antenna 610, and the NFC signal output from the NFC antenna 610 may be transmitted to the adjacent NFC reader 690 (e.g., the NFC reader 490 of FIG. 4) due to the magnetic field formed as the current flows through the dummy pattern 620.

Referring to FIG. 6, in an embodiment, the NFC antenna 610 may be formed in a loop pattern, and the dummy pattern 620 disposed adjacent to the NFC antenna 610 may configure a loop (e.g., closed loop) independent of the NFC antenna 610.

According to an embodiment, a magnetic field may be generated by current flowing through the loop of the NFC antenna 610, and current may flow through the loop of the adjacent dummy pattern 620 due to mutual induction. The current flowing through the dummy pattern 620 may form a magnetic field around the dummy pattern 620, and when the NFC antenna 695 of the NFC reader 690 is located adjacent to the dummy pattern 620, current may flow through the NFC antenna 695 of the NFC reader 690 due to mutual induction. Accordingly, a signal output through the NFC antenna 610 of the electronic device 600 may be transmitted to the NFC antenna 695 of the NFC reader 690 through the dummy pattern 620. Since the NFC antenna 695 of the NFC reader 690 may recognize a signal output from the NFC antenna 610 and/or the dummy pattern 620 of the electronic device, the recognition region of the NFC antenna 610 may be expanded.

According to an embodiment, an NFC polling signal of the NFC reader 690 may be coupled through the dummy pattern 620 to enable detection of the RF field by the NFC antenna 610 of the electronic device 600 to be easier.

As shown in FIG. 6, since the NFC antenna 610 of the electronic device 600 and the NFC antenna 695 of the NFC reader 690 are distant from each other due to the size difference between the NFC antenna 610 of the electronic device 600 and the NFC antenna 695 of the NFC reader 690, the NFC recognition may not be achieved even when the electronic device 600 is placed at the center of the NFC reader 690. For example, the data transmitted from the electronic device 600 may not be transmitted to the NFC reader 690 due to the unstable NFC communication between the NFC antenna 610 of the electronic device 600 and the NFC antenna 695 of the NFC reader 690.

According to an embodiment, due to the dummy pattern 620 disposed in a region uncovered by the NFC antenna 610, a signal output from the NFC antenna 610 of the electronic device 600 may be transmitted to the NFC reader 690 even when the NFC antenna 695 of the NFC reader 690 is adj acent to the dummy pattern 620, thereby expanding the NFC recognition region.

FIG. 7 illustrates an NFC antenna and a dummy pattern of an electronic device according to an embodiment.

According to an embodiment, a dummy pattern (e.g., the dummy pattern 420 of FIG. 4, the dummy pattern 521 of FIG. 5A, the dummy pattern 522 of FIG. 5B, or the dummy pattern 523 of FIG. 5C) disposed adjacent to an NFC antenna 710 (e.g., the NFC antenna 410 of FIG. 4, the NFC antenna 511 of FIG. 5A, the NFC antenna 512 of FIG. 5B, or the NFC antenna 513 of FIG. 5C) of an electronic device (e.g., the electronic device 400 of FIG. 4) may include a plurality of sub-dummy patterns 722, 724, and 726. According to an embodiment, the plurality of sub-dummy patterns 722, 724, and 726 may be physically spaced apart from each other and may configure each independent loop. According to an embodiment, all of the plurality of sub-dummy patterns 722, 724, and 726 may be mutually induced with the NFC antenna 710, or only one (e.g., a first sub-dummy pattern 722) of the plurality of sub-dummy patterns 722, 724, and 726 may be mutually induced with the NFC antenna 710.

Referring to FIG. 7, the dummy pattern of the electronic device may include three triangular dummy patterns including a first sub-dummy pattern 722, a second sub-dummy pattern 724, and a third sub-dummy pattern 726. In this case, a magnetic field may be generated by the current flowing through the loop of the NFC antenna 710, and the current may flow through the loop of the first sub-dummy pattern 722 adjacent to the NFC antenna 710 due to mutual induction. The current flowing through the first sub-dummy pattern 722 may form a magnetic field around the first sub-dummy pattern 722, and current may flow through the loop of the second sub-dummy pattern 724 adjacent to the first sub-dummy pattern 722 and the loop of the third sub-dummy pattern 726 due to mutual induction. When the current flows through the second sub-dummy pattern 724 and the third sub-dummy pattern 726, a magnetic field may be formed therearound, and when the NFC antenna (e.g., the NFC antenna 695 of FIG. 6) of the NFC reader (e.g., the NFC reader 690 of FIG. 6) is adjacent to the first sub-dummy pattern 722, the second sub-dummy pattern 724, and/or the third sub-dummy pattern 726, current may flow therethrough due to mutual induction, and accordingly, the signal output from the NFC antenna 710 may be transmitted to the NFC reader.

Because a magnetic field is formed even in the center region of the dummy pattern loop including one dummy pattern (e.g., the dummy pattern 420 of FIG. 4), the NFC recognition region may be further expanded when the plurality of sub-dummy patterns 722, 724, and 726 are included as shown in FIG. 7.

FIG. 7 corresponds to an embodiment, and the number, shape, and/or arrangement structure of sub-dummy patterns are not limited thereto.

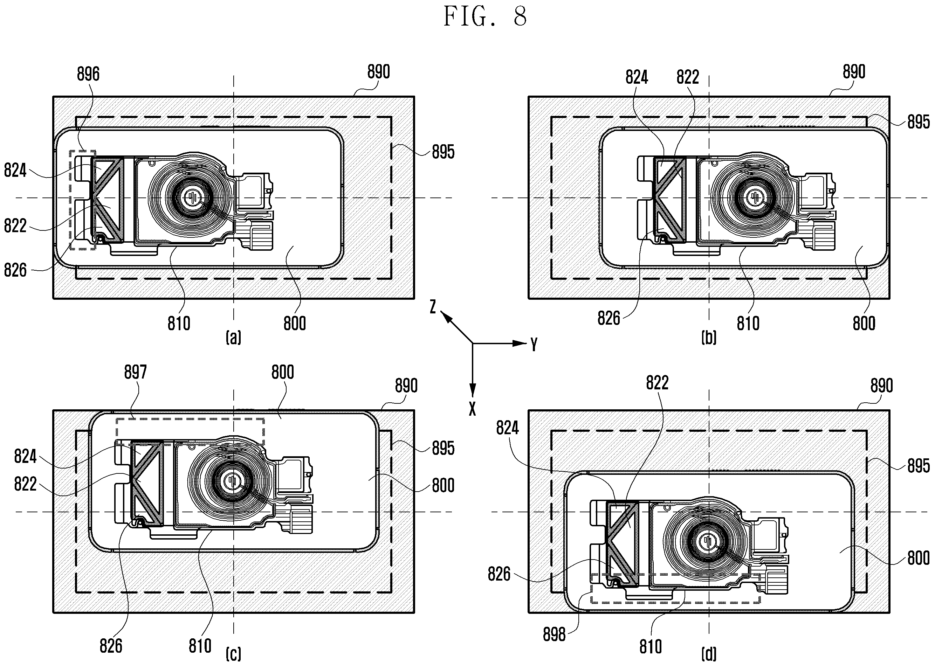

FIG. 8 illustrates the relative positions between an NFC antenna and a dummy pattern of an electronic device and an NFC antenna of an NFC reader when the electronic device is mounted at various positions on the NFC reader, according to an embodiment.

According to an embodiment, an electronic device (e.g., the electronic device 400 of FIG. 4) may include a dummy pattern (e.g., the dummy pattern 420 of FIG. 4, the dummy pattern 521 of FIG. 5A, the dummy pattern 522 of FIG. 5B, or the dummy pattern 523 of FIG. 5C) disposed adjacent to the NFC antenna (e.g., the NFC antenna 410 of FIG. 4, the NFC antenna 511 of FIG. 5A, the NFC antenna 512 of FIG. 5B, or the NFC antenna 513 of FIG. 5C) to configure an independent loop, thereby expanding the NFC recognition region. According to an embodiment, the dummy patterns may include a first sub-dummy pattern 822 (e.g., the first sub-dummy pattern 722 of FIG. 7), a second sub-dummy pattern 824 (e.g., the second sub-dummy pattern 724 of FIG. 7), and/or a third sub-dummy pattern 826 (e.g., the third sub-dummy pattern 726 of FIG. 7), which each configures an independent loop. The number, position, and size of dummy patterns are not limited to those shown in FIG. 8.
(a) of FIG. 8 illustrates an electronic device 800 mounted after having been moved in the -y direction from the center of the NFC reader 890. In this case, it may be difficult to transmit a signal output from the NFC antenna 810 of the electronic device 800 directly to the NFC antenna 895 of the NFC reader 890 because no adjacent region may exist between the NFC antenna 810 of the electronic device 800 and the NFC antenna 895 of the NFC reader 890. Due to the region 896 in which the dummy patterns 822, 824, and 826 of the electronic device 800 and the NFC antenna 895 of the NFC reader 890 overlap and are mutually induced with each other, a mutually induced current may flow through the NFC reader 890 due to the electromagnetic field formed by the dummy patterns 822, 824, and 826, and accordingly, a signal output from the NFC antenna 810 of the electronic device 800 may be transmitted to the NFC antenna 895 of the NFC reader 890.
(b) of FIG. 8 illustrates the electronic device 800 mounted after having been moved in the y direction from the center of the NFC reader 890. In this case, it may be difficult to transmit a signal output from the NFC antenna 810 of the electronic device 800 to the NFC antenna 895 of the NFC reader 890 because no adjacent region may exist between the NFC antenna 810 or the dummy patterns 822, 824, and 826 of the electronic device 800 and the NFC antenna 895 of the NFC reader 890. According to an embodiment, the electronic device 800 may include a plurality of dummy patterns 822, 824, and 826, and for example, when the additional dummy patterns 822, 824, and 826 are disposed in the y direction of the NFC antenna 810, a region in which the dummy patterns 822, 824, and 826 and the NFC antenna 895 of the NFC reader 890 overlap and are mutually induced with each other may be formed even when the electronic device 800 is mounted as shown in (b) of FIG. 8, thereby transmitting an NFC signal.
(c) of FIG. 8 illustrates the electronic device 800 mounted after having been moved in the -x direction from the center of the NFC reader 890. In this case, the region 897 in which the NFC antenna 810 and dummy patterns 822, 824, and 826 of the electronic device 800 and the NFC antenna 895 of the NFC reader 890 overlap and are mutually induced with each other may be expanded by adding the dummy patterns 822, 824, and 826 to the region where the NFC antenna 810 of the electronic device 800 and the NFC antenna 895 of the NFC reader 890 overlap, thereby achieving more accurate NFC recognition.
(d) of FIG. 8 illustrates the electronic device 800 mounted after having been moved in the x direction from the center of the NFC reader 890. In this case, the region 898 in which the NFC antenna 810 and dummy patterns 822, 824, and 826 of the electronic device 800 and the NFC antenna 895 of the NFC reader 890 overlap and are mutually induced with each other may be expanded by adding the dummy patterns 822, 824, and 826 to the region where the NFC antenna 810 of the electronic device 800 and the NFC antenna 895 of the NFC reader 890 overlap, thereby achieving more accurate NFC recognition.

FIG. 9 illustrates a dummy pattern arranged on an external cover according to an embodiment.

According to an embodiment, dummy patterns 970 and 975 for expanding the recognition region of an NFC antenna 910 of an electronic device 900 may be disposed on an accessory cover 960 configured to be detachable from a housing of the electronic device 900.

Referring to FIG. 9, in an embodiment, the accessory cover 960 may include a hole 965 corresponding to a region 930 where a camera and a sensor of the electronic device 900 are disposed, and the accessory cover may be configured to allow the camera and the sensor to be located in the hole 965 so as to sense external light when the accessory cover 960 is coupled to the back cover 980 of the electronic device 900.

According to an embodiment, the accessory cover 960 may include at least one dummy pattern 970 or 975 which may be arranged adjacent to enable mutual induction with the NFC antenna 910 of the electronic device 900 when the accessory cover 960 is coupled to the electronic device 900. Referring to FIG. 9, in an embodiment, when the accessory cover 960 is coupled to the electronic device 900, the accessory cover 960 may include a first dummy pattern 970 which may be disposed adjacent to the y direction of the NFC antenna 910, and a second dummy pattern 975 which may be disposed adjacent to the -y direction of the NFC antenna 910.

According to an embodiment, the dummy pattern (e.g., the first dummy pattern 970 or the second dummy pattern 975) of the accessory cover 960 may include a metal material (e.g., Cu) and a passive element, and may configure an electrical loop. For example, the remaining regions of the accessory cover 960 other than the dummy patterns 970 and 975 may be formed of a non-conductive material (e.g., plastic, ceramic, or glass). The dummy patterns 970 and 975 may be surrounded by a non-conductive material and not exposed to the outside.

According to an embodiment, when the accessory cover 960 is coupled to the electronic device 900, mutual induction may be formed between the pattern of the NFC antenna 910 and the dummy pattern (e.g., the first dummy pattern 970 or the second dummy pattern 975). For example, when current flows through the loop of the NFC antenna 910 according to the NFC signal output, an electromagnetic field may be generated therearound, and current (or an induction signal) may flow through the loop of the dummy patterns 970 and 975. The current flowing through the loop of the dummy patterns 970 and 975 may again generate an electromagnetic field, and current due to mutual induction may flow through the NFC antenna of an adjacent NFC reader. Accordingly, the NFC signal output from the NFC antenna 910 of the electronic device 900 may be transmitted to the NFC antenna of the NFC reader via the dummy patterns 970 and 975.

Since the dummy pattern (e.g., the first dummy pattern 970 or the second dummy pattern 975) disposed on the accessory cover 960 is disposed in a region where the NFC antenna 910 is not disposed, the NFC recognition region may be expanded when the accessory cover 960 is coupled to the electronic device 900. In addition, when the accessory cover 960 is coupled to the electronic device 900, NFC signals may be transmitted to the outside through the dummy patterns 970 and 975 of the accessory cover 960, thereby improving the NFC recognition, even when the region of the accessory cover 960 overlapping with the NFC antenna 910 is formed of a metal material.

FIG. 10 illustrates an arrangement structure of an RF antenna and a dummy pattern according to an embodiment.

According to an embodiment, an electronic device (e.g., the electronic device 400 of FIG. 4) may include at least one RF antenna 1090 configured to output an RF signal in a higher frequency band than an NFC antenna. For example, the electronic device may support at least one wireless communication method, such as cellular wireless communication (e.g., 4G LTE or 5G NR), Wi-Fi, or Bluetooth, and may include at least one RF antenna 1090 for transmitting and receiving signals in each wireless communication method. The frequency band used in each wireless communication method is not defined, but some RF antennas 1090 may transmit and/or receive signals in the mmWave band.

According to an embodiment, at least one of the at least one RF antenna 1090 may be disposed in a loop configured by the dummy pattern 1020. Referring to FIG. 10, for example, the electronic device may include three patch antennas, and each patch antenna may transmit and/or receive a signal in the mmWave band. In that way, the dummy pattern 1020 may function as a conductive lens, by preventing radio wave leakage on the non-conductive material, thereby improving the beamforming antenna, individually.

According to an embodiment, the dummy pattern 1020 may be disposed around the RF antenna 1090 to function as a conductive lens. For example, the leakage current of radio waves output by the RF antenna 1090 may be reduced by the dummy pattern 1020.

The electronic device 400 according to various embodiments of the disclosure may include a housing, a display, a coil antenna 410 disposed within the housing and in a first direction of the display, a dummy pattern 420 disposed adjacent to the coil antenna 410 and in a second direction different from the first direction from the coil antenna 410, and a processor configured to transmit a signal to an external electronic device 400 through the coil antenna 410.

According to an embodiment, the dummy pattern 420 may configure a closed loop.

According to an embodiment, when current flows through the coil antenna 410 according to a signal transmitted from the processor, current may flow through the dummy pattern 420 due to mutual induction.

According to an embodiment, when current flows through the dummy pattern 420, a signal output from the coil antenna 410 may be transmitted to the adjacent external electronic device 400 due to a magnetic field formed by at least one of the coil antenna 410 or the dummy pattern 420.

According to an embodiment, the dummy pattern 420 may be disposed in at least one position uncovered by the coil antenna 410 and in the first direction of the display.

According to an embodiment, the dummy pattern 420 may configure a closed loop which is independent of the closed loop configured by the coil antenna 410.

According to an embodiment, the electronic device 400, 501, 502, or 503 may further include a battery 570 disposed in the first direction of the display 560, and the dummy pattern 420 may be disposed within the housing and between the back cover 280 of the housing and the battery 570.

According to an embodiment, the coil antenna 511, 512, or 513 may be disposed on a flexible printed circuit board (FPCB) 541, 542, or 543, and the dummy pattern 521, 522, or 523 may be arranged to be spaced apart from the FPCB 541, 542, or 543 within the housing.

According to an embodiment, the electronic device 400, 501, 502, or 503 may further include a polyethylene terephthalate (PET) film 551, 552, or 553 including at least a portion disposed in a third direction opposite to the first direction from the FPCB 541, 542, or 543, and the dummy pattern 521, 522, or 523 may be attached to the PET film 551, 552, or 553.

According to an embodiment, the electronic device 400, 501, 502, or 503 may further include a shielding sheet 531, 532, 533, 536, 537, or 538 disposed between the display 560 and the coil antenna 511, 512, or 513.

According to an embodiment, the shielding sheet 531 or 536 may include a first region where the coil antenna 511 is disposed in the first direction, and a second region where the coil antenna 511 is not disposed, and the dummy pattern 521 may be disposed in the first direction of the second region.

According to an embodiment, the dummy pattern 522 may be disposed in a region where the shielding sheet 532 or 537 is not disposed and in the first direction of the display 560.

According to an embodiment, the electronic device 503 may further include a metal sheet 590 disposed between the display 560 and the shielding sheet 533 or 538, and the dummy pattern 523 may be formed as a portion of the metal sheet 590.

According to an embodiment, the electronic device 400 may further include at least one capacitor and/or at least one inductor connected to the dummy pattern 420.

According to an embodiment, the dummy pattern 420 may include a plurality of sub-dummy patterns 822, 824, and 826 arranged adjacent to each other, and each of the plurality of sub-dummy patterns 822, 824, and 826 may configure a closed loop.

According to an embodiment, the plurality of sub-dummy patterns 822, 824, and 826 may include a first sub-dummy pattern 822, a second sub-dummy pattern 824, and a third sub-dummy pattern 826.

According to an embodiment, when current flows through the coil antenna 810 according to a signal transmitted from the processor, current may flow through the first sub-dummy pattern 822 due to mutual induction between the coil antenna 810 and the first sub-dummy pattern 822, current may flow through the second sub-dummy pattern 824 due to mutual induction between the first sub-dummy pattern 822 and the second sub-dummy pattern 824, and current may flow through the third sub-dummy pattern 826 due to mutual induction between the first sub-dummy pattern 822 and the third sub-dummy pattern 826.

According to an embodiment, a signal output from the coil antenna 810 may be transmitted to the external electronic device 890 due to a magnetic field formed by the first sub-dummy pattern 822, the second sub-dummy pattern 824, and the third sub-dummy pattern 826.

According to an embodiment, the electronic device 400 may further include at least one RF antenna 1090 configured to output a signal in a higher frequency band than the coil antenna 410, and at least one of the at least one RF antenna 1090 may be disposed in a loop configured by the dummy pattern 1020.

According to an embodiment, leakage current of radio waves output by the at least one RF antenna 1090 may be reduced by the dummy pattern 1020.

According to an embodiment, the electronic device 900 may further include an accessory cover 960 detachable from the housing, and the dummy pattern 970 or 975 may be disposed on the accessory cover 960.

According to an embodiment, when current flows through the coil antenna 910 in a state in which the accessory cover 960 is coupled to the electronic device 900, current may flow through the dummy pattern 970 or 975 of the accessory cover 960 due to mutual induction.

According to an embodiment, the external electronic device may be an NFC reader 410.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a housing;
a display;
a coil antenna disposed within the housing and in a first direction of the display, and configuring a first closed loop;
a dummy pattern disposed adjacent to the coil antenna and in a second direction different from the first direction from the coil antenna; and
a processor configured to transmit a signal to an external electronic device through the coil antenna,
wherein the dummy pattern configures a second closed loop independent of the first closed loop, and
wherein in case that current flows through the coil antenna according to a signal transmitted from the processor, current flows through the dummy pattern due to mutual induction.

2. The electronic device of claim 1, wherein in case that current flows through the dummy pattern, a signal output from the coil antenna is transmitted to the adjacent external electronic device due to a magnetic field formed by at least one of the coil antenna or the dummy pattern.

3. The electronic device of claim 1 or 2, wherein the dummy pattern is disposed in at least one position uncovered by the coil antenna and in the first direction of the display.

4. The electronic device of one of claims 1 to 3, further comprising a battery disposed in the first direction of the display,
wherein the dummy pattern is disposed within the housing and between the back cover of the housing and the battery.

5. The electronic device of one of claims 1 to 4, wherein the coil antenna is disposed on a flexible printed circuit board, FPCB, and
wherein the dummy pattern is disposed to be spaced apart from the FPCB within the housing.

6. The electronic device of claim 5, further comprising a polyethylene terephthalate, PET, film having at least a portion disposed in a third direction opposite to the first direction from the FPCB,
wherein the dummy pattern is attached to the PET film.

7. The electronic device of one of claims 1 to 6, further comprising a shielding sheet disposed between the display and the coil antenna.

8. The electronic device of claim 7, wherein the shielding sheet comprises a first region where the coil antenna is disposed in the first direction, and a second region where the coil antenna is not disposed, and
wherein the dummy pattern is disposed in the first direction of the second region.

9. The electronic device of claim 7, wherein the dummy pattern is disposed in a region where the shielding sheet is not disposed and in the first direction of the display.

10. The electronic device of claim 7, further comprising a metal sheet disposed between the display and the shielding sheet,
wherein the dummy pattern is formed as a portion of the metal sheet.

11. The electronic device of one of claims 1 to 10, wherein the dummy pattern comprises a plurality of sub-dummy patterns arranged adjacent to each other, and
wherein each of the plurality of sub-dummy patterns configures a third closed loop.

12. The electronic device of claim 11, wherein the plurality of sub-dummy patterns comprise a first sub-dummy pattern, a second sub-dummy pattern, and a third sub-dummy pattern, and
wherein in case that current flows through the coil antenna according to a signal transmitted from the processor, current flows through the first sub-dummy pattern due to mutual induction between the coil antenna and the first sub-dummy pattern, current flows through the second sub-dummy pattern due to mutual induction between the first sub-dummy pattern and the second sub-dummy pattern, and current flows through the third sub-dummy pattern due to mutual induction between the first sub-dummy pattern and the third sub-dummy pattern.

13. The electronic device of claim 12, wherein in case that the current flows through the coil antenna according to the signal transmitted from the processor, the current flows due to a magnetic field formed by the first sub-dummy pattern, the second sub-dummy pattern, and the third sub-dummy pattern.

14. The electronic device of one of claims 1 to 13, further comprising at least one RF antenna configured to output a signal in a higher frequency band than the coil antenna,
wherein at least one of the at least one RF antenna is disposed in the second closed loop configured by the dummy pattern.

15. The electronic device of claim 1, further comprising an accessory cover detachable from the housing,
wherein the dummy pattern is disposed on the accessory cover, and
wherein in case that current flows through the coil antenna in a state in which the accessory cover is coupled to the electronic device, current flows through the dummy pattern of the accessory cover due to mutual induction.
